(19) Europäisches Patentamt
European Patent Office
Office européen des brevets

(11) **EP 1 243 905 A1**

(12) **EUROPÄISCHE PATENTANMELDUNG**

(43) Veröffentlichungstag:
**25.09.2002 Patentblatt 2002/39**

(51) Int Cl.$^7$: **G01L 1/12**, G01L 1/14

(21) Anmeldenummer: **01127065.9**

(22) Anmeldetag: **14.11.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **23.03.2001 DE 10114218**

(71) Anmelder: **ROBERT BOSCH GMBH**
**70442 Stuttgart (DE)**

(72) Erfinder:
• **Bollweber, Lothar**
**76479 Steinmauern (DE)**
• **Gerlach, Günter**
**76437 Rastatt (DE)**

(54) **Verfahren und Vorrichtung zur Auswertung von Signalen magnetoelastischer Sensoren**

(57) Die Erfindung bezieht sich auf ein Verfahren zur Ermittlung einer Kraft (8) durch einen Kraftsensor (7) und der Temperatur (61, 62) des Kraftsensors (7). Dieser umfaßt eine Primärspule (9) und eine Sekundärspule (10). Mittels eines Steuerblocks (2) erfolgt ein synchronisiertes Anlegen eines Takteingangssignals (1) und die Umschaltung zwischen einem Temperaturmeßmodus (29) und einem Kraftmeßmodus (30). Im Temperaturmeßmodus (29) wird die Gleichstrom-Widerstandsänderung einer der Spulen (9, 10) des Kraftsensors (7) erfaßt.

Fig. 1

**Beschreibung**

Technisches Gebiet

Es sind magnetoelastische Kraftsensoren nach dem Kreuzduktor- oder dem Transduktorprinzip bekannt. Diese werden in der Regel im elektromechanischen Bremssystem eingesetzt und sind für einen Temperaturbereich zwischen -40°C und ca. 300°C ausgelegt. Mit diesen Sensoren werden reine Druckkräfte, Zug- und Druckkräfte sowie Torsions- und Biegemomente erfaßt. Solche magnetoelastischen Sensoren gemäß des Transduktorprinzips werden beispielsweise bei Ackerschleppern in Serie eingesetzt. Die Genauigkeit der Signale solcher magnetoelastischer Sensoren wird im wesentlichen durch ihr Driftverhalten hinsichtlich Empfindlichkeit und Offset bestimmt.

Stand der Technik

DE 197 20 641 A1 bezieht sich auf einen magnetoelastischen Kraftsensor. Es wird ein magnetoelastischer Kraftsensor mit einer Erregerspule und einer Sekundärspule vorgeschlagen, dessen Spulen sich in einem Winkel von 90° kreuzen. Es ist ein magnetoelastischer Spulenkern vorhanden, der an Krafteinleitungsflächen mit der zu messenden Kraft beaufschlagbar ist, wobei an der Sekundärspule des Sensors ein der Kraft F äquivalentes Meßsignal abnehmbar ist. Der magnetoelastische Spulenkern besteht aus einem massiven oder gesinterten Materialblock mit magnetostriktiven Materialeigenschaften und ist von einem magnetisch leitenden Mantel umgeben. Außen am Spulenkern sind Wicklungsnuten für die Aufnahme der Erregerspule und der Sensorspule eingearbeitet.

DE 197 55 874 A1 bezieht sich auf einen Kraftsensor. Dieser umfaßt wenigstens ein druckmessendes Sensorelement, das in Abhängigkeit einer über eine Polymerschicht auf das Sensorelement wirkenden Druck- oder Zugkraft ein weitestgehend proportionales Sensorsignal liefert. Ferner wird eine Auswerteschaltung des Sensorsignals offenbart. Es ist vorgesehen, daß wenigstens ein Sensorelement und die Auswerteschaltung in ein gemeinsames Bauelement integriert sind. Die Auswerteschaltung ist über aus dem Bauelement herausgeführte, druckdichte elektrische Anschlüsse kontaktierbar.

DE 197 53 975 A1 bezieht sich ebenfalls auf einen Kraftsensor. Dabei handelt es sich um einen, insbesondere transformatorisch wirkenden, magnetoelastischen Kraftsensor mit einer mit Wechselspannung beaufschlagbaren Primärwicklung und einer orthogonal zur Primärwicklung angeordneten Sekundärwicklung, wobei in Abhängigkeit einer auf den Kraftsensor wirkenden Kraft in der Sekundärwicklung eine Sekundärspannung induziert wird. Es ist vorgesehen, daß ein Teil der Primärwicklung als Kompensationswicklung zur Kompensation eines Offsetfehlers parallel zur Sekundärwicklung und somit orthogonal zur Primärwicklung aufgebracht ist.

Aus DE 198 18 650 A1 schließlich ist ein weiterer Kraftsensor bekannt. Dieser umfaßt einen durch Krafteinwirkung elastisch verformbaren Elastomerkörper. Vom Elastomerkörper sind wenigstens zwei Leiterpaare umschlossen. Die Leiterpaare sind so nahe beieinander angeordnet, daß bei Anliegen einer Wechselspannung an einem Leiterpaar dessen elektrisches oder magnetisches Feld das andere Leiterpaar beeinflußt.

Vorteile der Erfindung

Die Vorteile der erfindungsgemäß vorgeschlagenen Lösung sind vor allem darin zu erblikken, daß durch die erfindungsgemäße Lösung bei magnetoelastischen Sensoren, die in höheren Temperaturbereichen eingesetzt werden können, eine wesentliche Verbesserung dadurch erzeugt werden kann, wenn die Information der Sensortemperatur zur Verfügung steht. Dabei ist wichtig, daß die Temperatur im Sensor-Inneren erfaßt wird, die maßgebend für das Driftverhalten des Sensors hinsichtlich Empfindlichkeitsänderungen und Offset ist und nicht die Temperatur der Sensormantelfläche, die Rückschlüsse auf Empfindlichkeitsänderungen bzw. Offsetdrift nur unzureichend wiederspiegelt. Die Temperaturinformation erlaubt bei einer Sensorapplikation in elektromechanischen Bremssystemen eine erweiterte Diagnosemöglichkeit und verbessert die Sicherheit erheblich.

Da am Kraftsensor neben der Kraftmessung auch die Temperaturinformation ermittelt werden kann, kann sowohl ein zusätzlicher, am Kraftsensor anzubringender Temperatursensor als auch zwei für diesen erforderliche Hochtemperaturkontaktierungen eingespart werden. Durch die Integration der Temperaturmessung in den Kraftsensor lassen sich erhebliche Kosteneinsparungen realisieren, wobei gewährleistet ist, daß bei einer Taktsignalfrequenz von 200 Hz, welche bei elektromechanischen Bremssystemen mit einem Zeitraster von 2,5 ms gefordert ist, sich nach 2,3 ms eine Abweichung im Kraftsignal mit einer Fehlerrate von etwa 1% und sich nach demselben Zeitraum von 2,3 ms eine Abweichung der Temperatur im Kraftsensor mit einem Fehler von 1°C einstellt.

Durch die Integration der Temperaturmessung unmittelbar in den Kraftsensor ist kein Bauraum erforderlich für einen zusätzlichen Temperatursensor sowie dessen Kontaktierung. Die Kosteneinsparung, die sich bei Einsatz eines geschirmten Hochtemperaturkabels erzielen läßt (4-adriges Kabel zur Auswerteschaltung) liegt bei etwa 40%. Die erfindungsgemäße Lösung ist an allen magnetoelastischen Sensoren einsetzbar; die Auswerteschaltung läßt sich problemlos auf integrierten Schaltkreisen aufbringen. Ein weiterer Vorteil der erfindungsgemäßen Lösung ist darin zu erblicken, daß die Übergangswiderstände und deren Driftverhalten die Meßweise des Kraftsensors nicht beeinflussen.

Bei sicherheitskritischen Anwendungen, wie zum Beispiel bei Einsatz eines Kraftsensors in elektromechanischen Bremssystemen ist sichergestellt, daß im Fehlerfall stets das ursprüngliche Kraftsignal zur Verfügung steht, so daß die Funktion eines elektromechanischen Bremssystems allzeit gewährleistet ist.

Bei Bekanntsein der Sensorkerntemperatur ist nunmehr eine Genauigkeitsverbesserung des Sensors möglich, die durch Korrektur der Sensorausgangssignale hinsichtlich Empfindlichkeit und Driftverhalten aufgrund der Temperatur erfolgen kann. Weiterhin besteht eine erweiterte Diagnosemöglichkeit des Sensors im Rahmen einer Selbstdiagnose oder einer Plausibilitätsüberprüfung.

Die Absolutgenauigkeit des getakteten Temperatursignals läßt sich im kritischen Temperaturbereich von -40°C bis 250°C auf +/- 0,4% verbessern, wenn eine mittlere, bekannte lineare Abweichung korrigiert wird.

## Zeichnung

Anhand der Zeichnung wird die Erfindung nachstehend detaillierter erläutert.

Es zeigt:

Figur 1  die Auswerteschaltung zur Fassung von Kraft- bzw. von Temperatursignalen eines magnetoelastischen Sensors,

Figur 2  das Einschwingverhalten des Kraftsignals,

Figur 3  das Einschwingverhalten des Temperatursignals und

Figur 4  ein gemessener Widerstandsänderungsverlauf einer aus dem Stand der Technik bekannten Sekundärspule eines magnetoelastischen Sensors.

## Ausführungsvarianten

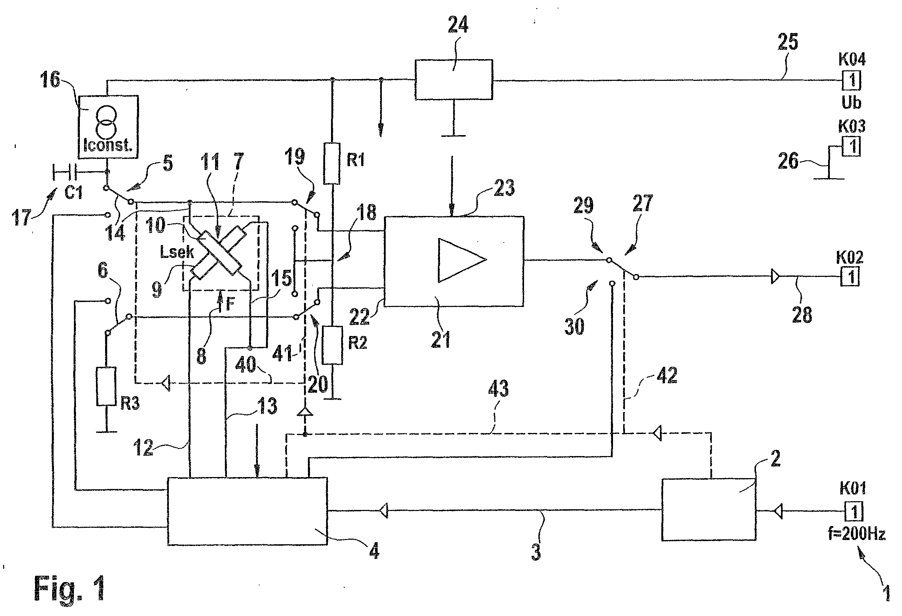

Figur 1 zeigt die Auswerteschaltung zur Erfassung von Kraft- bzw. Temperatursignalen eines magnetoelastischen Sensors.

Die in Figur 1 wiedergegebene Auswerteschaltung läßt sich besonders vorteilhaft in CMOS-Technologie erstellen.

Der Auswerteschaltung gemäß Figur 1 ist ein Steuerblock 2 entnehmbar, welches mit einem Takteingangssignal - hier beispielsweise f = 200 Hz - beaufschlagt ist. Mit den Bezugszeichen 5 bzw. 6 sind zwei. Schaltelemente, die vorzugsweise als CMOS-Schalter ausgeführt sein können, bezeichnet, über welche eine Sekundärspule 10 eines Kraftsensors 7 mit einer Konstantstromquelle 16 verbunden werden kann. Der magnetoelastische Kraftsensor 7 gemäß der Darstellung in Figur 1 umfaßt eine Primärspule 9 und eine Sekundärspule 10, die beispielsweise zueinander in gekreuzter Orientierung 11 angeordnet sind. Die Primärspule 9 des Kraftsensors 7 steht über Leitungen 12 bzw. 13, über welche die Primärspannung eingespeist wird, mit der Auswerteschaltung 4 des Kraftsensors 7 in Verbindung. Der magnetoelastische Kraftsensor 7, dessen Beschaltung nachstehend eingehender beschrieben wird, kann ein Kraft-, ein Momenten-, ein Torsions- oder eine Biegespannungssensor sein. In der Darstellung gemäß Figur 1 ist der Kraftsensor gemäß des Kreuzduktorprinzipes aufgebaut; es lassen sich jedoch durchaus auch magnetoelastische Kraftsensoren 7 gemäß des Transduktorprinzipes einsetzen, ebenso nicht-gekreuzte Spulenvarianten.

Die Sekundärspule 10 des Kraftsensors 7 steht über Anschlüsse 14 bzw. 15 mit den Schaltelementen 5 bzw. 19 eines oberen Zweiges sowie mit den Schaltelementen 6 bzw. 20 eines unteren Zweiges in Verbindung. Die Schaltelemente 5, 6 19 und 20 werden bevorzugt als CMOS-Schalter ausgeführt. Über die Schaltelemente 19 bzw. 20 läßt sich die Sekundärspule 10 des Kraftsensors 7 mit der Eingangsseite 22 eines Verstärkers 21 verbinden. Zwischen dem Verstärker 21 und den Schaltelementen 19 bzw. 20 sind Widerstände $R_1$ bzw. $R_2$ aufgenommen, die in einem Betriebsmodus des Kraftsensors 7 eine Mittenspannung an der Eingangsseite 22 des Verstärkers 21 anlegen.

Die Versorgungsspannung 25 wird über eine hier nicht dargestellte Batterie geliefert, der ein Spannungsregler 24 zugeordnet ist. Im Kraftfahrzeugbereich steht nur eine unipolare Versorgungsspannung zur Verfügung, daher wird die Primärspule 9 des magnetoelastischen Kraftsensors 7 an einer H-Brückenschaltung betrieben. Über den Spannungsregler 24 wird auch die Konstantstromquelle 16 gespeist, der eine separate Kapazität $C_1$ (Bezugszeichen 17) zugeordnet ist. Der Masseanschluß 26 stellt den Bezugspunkt dar.

Der Verstärker 21, dem eine Stabilisierungsspannung 23 aufgegeben wird, steht ausgangsseitig mit einem über die Ansteuerleitung 42 vom Steuerblock 2 zwischen den Betriebsmodi 29 bzw. 30 der Auswerteschaltung gemäß Figur 1 umschaltenden Moduswähler 27 in Verbindung. Hinter dem Moduswähler 27 ist eine Ausgangsleitung 28 ausgebildet, auf welcher je nach Betriebsmodus, das Kraft- oder Temperatursignal zur weiteren Verarbeitung zur Verfügung steht.

Vom Steuerblock 2 verläuft eine Ansteuerleitung 43 zum Auswertebaustein 4 des Kraftsensors 7; ferner erstrecken sich Ansteuerleitung 40, 41 vom Steuerblock 2 der Auswerteschaltung gemäß Figur 1 zu den Schaltelementen 5 bzw. 6 sowie zu den Schaltelementen 19 bzw. 20. Über eine Ansteuerleitung 42 steuert der Steuerblock 2 ebenfalls den betriebsmodusabhängig gesteuerten Schalter 27, mit welchem das verstärkerausgangsseitig anliegende Signal je nach Betriebsmodus 29 bzw. 30 einer Ausgangsleitung 28 aufgegeben wird. Die über die Ansteuerleitungen 40, 41, 42 bzw.

43 jeweils erfolgenden Ansteuervorgänge der Schaltelemente 5, 6; 19, 20 sowie 27 werden aus Sicherheitsgründen von einem extern gelieferten Takteingangssignal 1 über den Steuerblock 2 gesteuert, da hierdurch im Steuerblock bekannt ist, wann nach der entsprechenden Taktsignalflanke das zu messende Temperatur- oder Kraftsignal seine Gültigkeit hat und abgetastet werden kann.

In vorteilhafter Weise wird mittels des erfindungsgemäß vorgeschlagenen Verfahrens zur Ermittlung der Temperatur im Innern des Kraftsensors 7 die Gleichstrom-Widerstandsänderung (spezifische Widerstandsänderung von Kupfer) in einer der Spule 9 bzw. 10 der in gekreuzter Anordnung 11 am Kraftsensor 7 ausgebildeten Spulen gemessen. Zur Bestimmung der angesprochenen Widerstandsänderung wird die Sekundärspule 10 ausgewählt, da deren Gleichstromwiderstand um den Faktor 10 höher ist als der Widerstand der Primärspule 9. Dadurch ist bei gleichem Ausgangsspannungshub über der Spule der erforderliche Konstantstrom, geliefert von der Konstantstromquelle 16, um den Faktor 10 geringer, wodurch die Eigenerwärmungsfehler ebenfalls sehr niedrig gehalten werden können.

Die spezifische Widerstandsänderung von Kupfer kann im Bereich von -40°C bis + 250°C als eine lineare Funktion betrachtet werden und beträgt 4,2 x $10^{-3}$/K. Für reine Metalle errechnet sich deren Widerstand R($\delta$) bei aktueller Temperatur gemäß der folgenden Beziehung:

$$R(\delta) = R(20°C) [1 + \alpha\Delta\delta + \beta\Delta\delta^2 + \chi..... + \varepsilon .....].$$

Darin sind

$$\Delta\delta = \delta\text{-}20°C$$

| | |
|---|---|
| R($\delta$) | Widerstand bei aktueller Temperatur |
| $\delta$ | aktuelle Temperatur |
| R(20°C) | Kupferwiderstand bei 20°C |
| $\alpha$ | linearer Temperaturbeiwert 4,19 x $10^{-3}$/K für Kupfer |
| $\beta$ | quadratischer Temperaturbeiwert 0,6 x $10^{+6}$/K für Kupfer |
| $\chi,\varepsilon...$ | Terme höherer Ordnung |

In der angegebenen Funktion sind die nicht linearen Terme höherer Ordnung ($\chi.....\varepsilon.....$) vernachlässigbar. Dadurch ergibt sich Maximaltemperatur von 250°C ein Fehler von 1%. Durch entsprechende Mittelung des linearen Temperaturbeiwertes beträgt der verbleibende Fehler 0,5%, wodurch sich die lineare Funktion gemäß der nachfolgenden Beziehung vereinfachen läßt:

$$R(\delta) = R(20°C) [1 + \alpha\Delta\delta]$$

Daraus ermittelt sich die gesuchte Temperatur $\delta$ gemäß der nachfolgenden Beziehung:

$$\delta = \frac{(R(\delta)/R20°C)\text{-}1}{\alpha} + \delta\ 20°C$$

In der in Figur 1 wiedergegebenen Schaltungsanordnung stehen alle Schaltelemente auf dem Betriebsmodus 29 Temperaturmessung. Dazu ist eine Konstantstromquelle 16 über ein, vorzugsweise als CMOS-Schalter ausgebildetes erstes Schaltelement 5 über den Anschluß 14 an die Sekundärspule 10 geschaltet. Um beim Aufschalten des Konstantstromes an die Sekundärspule 10 den induzierten Gegenspannungsanstieg zu reduzieren, wird die Speisung der Primärspule 9 im Nulldurchgang der Rechteckspannung abgeschaltet und der Verzögerung des Stromanstiegs in der Sekundärspule 10 mittels einer Kapazität $C_1$, (Bezugszeichen 17) entgegengewirkt.

Im Betriebsmodus 29 Temperaturerfassung des Kraftsensors 7 werden in einer H-Brückenschaltung, an die magnetoelastische Kraftsensoren 7 vorzugsweise betrieben werden, die oberen Brückentransistoren mit dem Steuersignal des Steuerblocks 2 gesperrt und zu diesem Zeitpunkt die Speisung der Primärspule 9 unterbunden. Ansonsten wäre im Betriebsmodus der Temperaturerfassung 29 der Betriebsmodus Kraftmessung 30 überlagert. Mittels des Steuerblocks 2 ist sichergestellt, daß die Umschaltvorgänge synchronisiert zum Takteingangssignal 1 und zum Nulldurchgang der Rechteckspannung, mit dem die Primärspule 9 gespeist wird, erfolgen.

Im Betriebsmodus 29 der Temperaturmessung wird über das dritte Schaltelement 19, welches bevorzugt als CMOS-Schalter beschaffen ist, das Temperatursignal dem Verstärker 21 zugeführt. Im Verstärker 21 erfolgen Offset- und Empfindlichkeitseinstellung. So entspricht zum Beispiel eine Außentemperatur von -50°C einer Spannung von 0,5 V, während eine Temperatur von 300°C einer Spannung von 4,0 V entspricht. Spannungspegel, die unterhalt von 0,5 V liegen, bedeuten Masseschluß oder Unterbrechung, Pegel, die die Spannung von 4,5 V überschreiten bedeuten Schluß nach Versorgungsspannung. Über den mit der Ansteuerleitung 42 ansteuerbaren Schalter 27 wird das jeweilige Ausgangssignal, sei es Temperatur oder Kraft, Biegemoment oder Torsionsmoment, auf die Ausgangsleitung 28 zum Steuergerät geschaltet. Die Übergangswiderstände und die Driftvorgänge der Schaltelemente 5, 6 bzw. 19, 20 haben im Betriebsmodus 29 Temperaturmessung keinen Einfluß, da sie sehr klein sind gegenüber dem Eingangswiderstand an der Eingangsseite 22 des Verstärkers 21.

Im Betriebsmodus 30 Kraftmessung des Kraftsensors 7 befinden sich die ersten und zweiten Schaltelemente 5 bzw. 6 in ihrer zu Figur 1 entgegengesetzten Position; über die Schaltelemente 19 bzw. 20 wird der Verstärker 21 an Mittenspannung geschaltet. Ferner wird im Betriebsmodus 30 Kraftmessung des Kraftsensors 7 über die Ansteuerleitung 42 das Schaltelement 27 von seiner Position 29 auf seine Position 30, welche dem Betriebsmodus Kraftmessung entspricht, umgeschaltet. Die Spannungsänderung aufgrund der mechanischen Beanspruchung des Kernmaterials des Kraftsensors 7 wird über die Leitungen 12, 13 dem Auswertebaustein 4 zugeführt, über welchen die Kraftinformation bei 30 ansteht und durch Umschalten des Schaltelementes 27 von seiner in Figur 1 dargestellten Position an den Anschluß 30 auf die Ausgangsleitung 28 zum Steuergerät gelegt werden kann.

Durch den Einsatz des Steuerblocks 2 ist sichergestellt, daß die Umschaltvorgänge synchronisiert zum Takteingangssignal 1 und im Nulldurchgang der Rechteckspannung des Primärspulensignals erfolgen. Hat sich ein Leitungsbruch am Takteingangssignal oder ein Masseschluß ergeben, ist der Steuerblock 2 so ausgeführt, daß über die im Modusschalter 27 sowie die Schaltelemente 5 bzw. 6 und 19 bzw. 20 der Kraftsignalweg, d.h. der Betriebsmodus 30 durchgeschaltet ist und an der Ausgangsleitung 28 das abgreifbare Kraftsignal zur Verfügung steht. Dies entspricht den Sicherheitsanforderungen neuer Bremsensysteme.

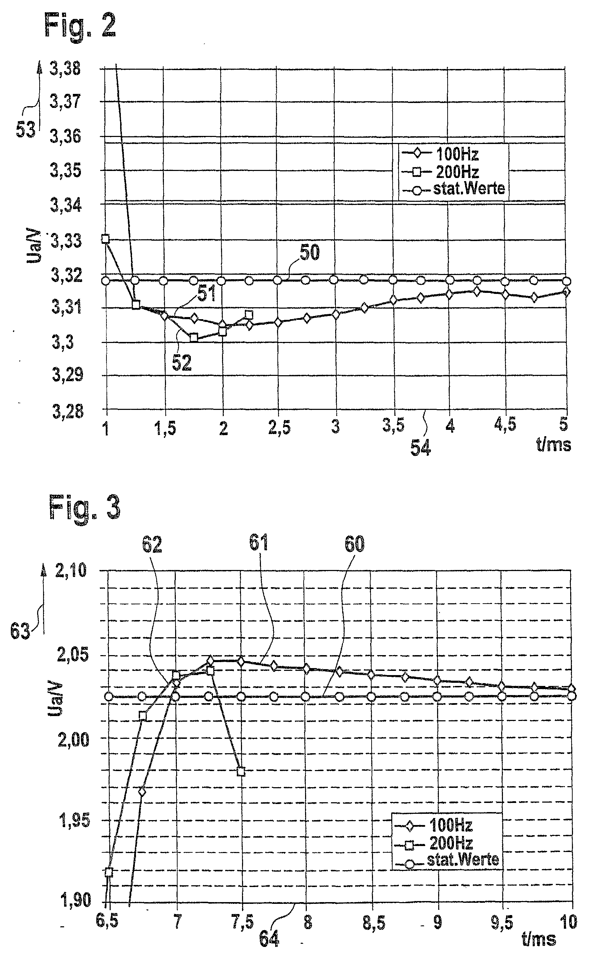

Um die Einschwingzeiten im Betriebsmodus 30 am Verstärker 21 zu verkürzen, kann im Betriebsmodus 30 Kraftmessung über die Widerstände $R_1$ und $R_2$ der Verstärker 21 im Betriebsmodus 30 Kraftmessung auf Mittenspannung gelegt werden. Die Einschwingzeiten (vgl. Darstellung gemäß Figur 2 und 3) lassen sich dadurch deutlich verkürzen. In Bezug auf die Widerstände im Betriebsmodus 30 ist der komplexe Widerstand der Sekundärspule 10 des Kraftsensors groß gegenüber dem Übergangswiderstand des ersten und zweiten Schaltelementes 5, 6, die bevorzugt als CMOS-Schalter ausführbar sind. Dadurch ist deren Einfluß vernachlässigbar. Der Übergangswiderstand und dessen Drift in bezug auf das Schaltelement 27 haben vernachlässigbar kleinen Einfluß, da seitens weiterer Auswertungen A/D-Wandler hochohmig ausgelegt sind.

Aus der Darstellung gemäß Figur 2 ist das Einschwingverhalten des Kraftsignals im Betriebsmodus Kraftmessung entnehmbar. Mit Bezugszeichen 53 ist die Ausgangsspannung in Volt bezeichnet, während mit Bezugszeichen 54 die Zeitachse unterteilt in ms identifiziert ist. Die statischen Werte entsprechen einem Kraftverlauf 50, in dem das Kernmaterial des Kraftsensors 7 keiner mechanischen Beanspruchung hinsichtlich Torsion, Biegung oder eines Momentes ausgesetzt ist. Bei Aufgabe eines Takteingangssignals 1 von 100 Hz an den Steuerblock 2 der Auswerteschaltung gemäß der Darstellung in Figur 1 stellt sich ein Kraftverlauf 51 ein, der dadurch charakterisiert ist, daß er sich mit zunehmender Zeit asymptotisch dem statischen Kraftverlauf 50 annähert. Da jedoch bei elektromechanischen Brems-Applikationen Signalzeitraster von 2,5 ms gefordert sind, ist eine Taktfrequenz von 200 Hz erforderlich. Bei einer Takteingangssignal-Frequenz von 200 Hz im Betriebsmodus 30 Kraftmessung ist ein Verlauf 52 ermittelbar, der innerhalb eines Zeitrasters von 2,5 ms, im in Figur 2 dargestellten Beispiel nach 2,3 ms eine Abweichung im Kraftsignal gemäß 10 mV, welches einem absoluten Fehler von 200 N bezogen auf den Meßbereich von 20 kN entspricht. Diese Abweichung im Kraftsignal von 10 mV entspricht einem Fehler von 1%. Die statischen Werte repräsentieren jeweils die Werte ohne Fehler.

In der Darstellung gemäß Figur 3 ist das Einschwingverhalten des Temperatursignals im Betriebsmodus Temperaturmessung des Kraftsensors dargestellt. Mit Bezugszeichen 63 ist der Ausgangsspannungsverlauf bezeichnet, während mit Bezugszeichen 64 die Zeitachse identifiziert ist. Die statischen Werte, d.h. ohne Taktung, sind mit Bezugszeichen 60 gekennzeichnet. Erfolgt im Betriebsmodus 29 der Auswerteschaltung gemäß der Darstellung in Figur 1 eine Temperaturermittlung im Kern des Kraftsensors 7, so stellt sich bei Applikation einer Takteingangssignal-Frequenz 1 von 100 Hz der mit Bezugszeichen 61 identifizierte Temperatursignalverlauf ein. Auch aus der Darstellung gemäß Figur 3 geht hervor, daß sich der Temperaturverlauf 61 im Verlauf der Zeit asymptotisch an den Verlauf 60 der statischen Temperatur annähert. Wird hingegen am Steuerblock 2 der Auswerteschaltung gemäß Darstellung in Figur 1 eine Takteingangssignal-Frequenz von 200 Hz aufgebracht, so stellt sich ein Temperaturverlauf 62 ein, welcher durch einen starken Anstieg der Ausgangsspannung innerhalb der ersten ms gekennzeichnet ist und aus dem hervorgeht, daß der Fehler des Temperatursignals innerhalb des geforderten Zeitrasters von maximal 2,3 s lediglich 5 mV beträgt, was eine Temperaturabweichung von 1°C bedeutet.

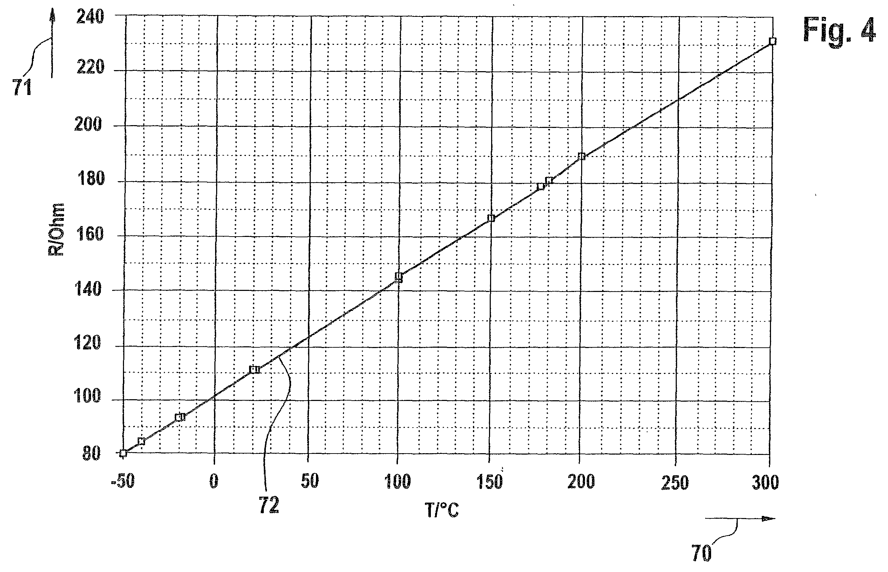

Der Darstellung gemäß Figur 4 ist ein gemessener Widerstandsänderungsverlauf einer aus dem Stand der Technik bekannten Sekundärspule eines magnetoelastischen Sensors entnehmbar. Aus der Darstellung gemäß Figur 4 geht hervor, daß der mit Bezugszeichen 72 identifizierte Verlauf des Widerstandes in einer Sekundärspule 10 eines Kraftsensors 7, aufgetragen über die Temperatur, den im Zusammenhang mit der Gleichstrom-Widerstandsänderung in Figur 1 erwähnten linearen Zusammenhang aufweist. Der in der Darstellung gemäß Figur 4 gemessene Verlauf der Widerstandsänderung einer Sekundärspule 10 eines magnetoelastischen Zug-Druckkraftsensors ist beispielsweise aus der DE 197 20 641 A1 bekannt. Der lineare mittlere Temperaturbeiwert beträgt $\alpha = 3,96 \times 10^{-3}$. Die Vernachlässigung der Terme höherer Ordnung bei den vorstehend angegebenen Gleichungen, d.h. $\chi..., \varepsilon...$ bewirkt im oberen Temperaturbereich zwischen 180 und 250°C einen Fehler von 0,3%. Daher ist es vorteilhaft, den mittleren Temperaturbeiwert für die jeweilige in Serie verwendete Kupferdrahtcharge zu ermitteln, aus welcher die Primär- und die Sekundärspule 9 bzw. 10 des Kraftsensors 7 gefertigt werden, da hierdurch die Genauigkeit bei Temperaturen von mehr als 200°C wesentlich verbessert werden kann. Diese Temperaturen stellen sich bei Applikationen von Kraftsensoren 7 bei elektromechanischen Bremssystemen, in denen Zeitraster der Signale von 2,5 ms und kürzer gefordert werden, im Betrieb öfter ein.

Bezugszeichenliste

| | |
|---|---|
| 1 | Takteingangssignal F = 200 Hz |
| 2 | Steuerblock |
| 3 | Steuerleitung |
| 4 | Auswerteschaltung Kraftsensor |
| 5 | erster CMOS-Schalter |
| 6 | zweiter CMOS-Schalter |
| 7 | magnetoelastischer Kraftsensor |
| 8 | zu messende Kraft |
| 9 | Primärspule |
| 10 | Sekundärspule |
| 11 | gekreuzte Anordnung |
| 12 | Primärspuleneingang Auswertebaustein |
| 13 | Primärspulenausgang Auswertebaustein |
| 14 | Anschluß Primärwicklung |
| 15 | Anschluß Sekundärwicklung |
| 16 | Konstantstromquelle |
| 17 | Kapazität $C_1$ |
| 18 | 1. Stabilisierungsspannungsniveau |
| 19 | dritter CMOS-Schalter |
| 20 | vierter CMOS-Schalter |
| 21 | Verstärker |
| 22 | Verstärkereingangsseite |
| 23 | Stabilisierungsspannungseingang |
| 24 | Spannungsregler |
| 25 | Spannungsquelle |
| 26 | Masseverbindung |
| 27 | Umschalter |
| 28 | Ausgangsleitung |
| 29 | Betriebsmodus Temperaturerfassung |
| 30 | Betriebsmodus Krafterfassung |
| 40 | Ansteuerleitung 5,6 |
| 41 | Ansteuerleitung 19, 20 |
| 42 | Ansteuerleitung 27 |
| 43 | Ansteuerleitung 4, 2 |
| 50 | Kraftverlauf statisch |
| 51 | Kraftverlauf 100 Hz-Taktung |
| 52 | Kraftverlauf 200 Hz-Taktung |
| 53 | Ausgangsspannung (Betriebsmodus 30) |
| 54 | Zeitachse |
| 60 | statischer Temperaturverlauf |
| 61 | Temperaturverlauf bei 100 Hz-Taktung |
| 62 | Temperaturverlauf bei 200 Hz-Taktung |

| | |
|---|---|
| 63 | Ausgangsspannung (Temperatur) (Betriebsmodus 29) |
| 64 | Zeitachse |
| 70 | Temperaturachse |
| 71 | Widerstandsachse |
| 72 | linearer Verlauf Widerstandsänderung Sekundärspule |
| $R_1$ | Widerstand |
| $R_2$ | Widerstand |
| $R_3$ | Widerstand |
| $C_1$ | Kapazität |

**Patentansprüche**

1. Verfahren zur Ermittlung einer Kraft durch einen magnetoelastischen Kraftsensor (7) und der Temperatur (61, 62) eines magnetoelastischen Kraftsensors, welcher eine Primärspule (9) und eine Sekundärspule (10) umfaßt, **dadurch gekennzeichnet, daß** mittels einer mit einem Taktsignal (1) beaufschlagten Auswerteschaltung (4) der magnetoelastische Kraftsensor (7) zwischen einem Temperaturmeßmodus (29) und einem Kraftmeßmodus (30) umgeschaltet wird, wobei im Temperaturmeßmodus (29) die Gleichstrom-Widerstandsänderung einer der Spulen (9, 10) des Kraftsensors (7) erfaßt wird.

2. Verfahren gemäß Anspruch 1, **dadurch gekennzeichnet, daß** der magnetoelastische Kraftsensor (7) über eine Spannungsquelle (25) mit einem Spannungsregler (24) mit stabilisierter Gleichspannung gespeist wird.

3. Verfahren gemäß der Ansprüche 1 und 2, **dadurch gekennzeichnet, daß** die Umschaltvorgänge zwischen den Betriebsmodi (29, 30) über einen Steuerblock (2) synchronisiert zum Takteingangssignal (1) im Nulldurchgang der Rechteckspannung der Speisung der Primärspule (9) erfolgen.

4. Verfahren gemäß Anspruch 3, **dadurch gekennzeichnet, daß** im Temperaturmeßmodus (29) des magnetoelastischen Kraftsensors (7) die Speisung der Primärspule (9) unterbrochen und eine Konstantstromquelle (16) mit der Sekundärspule (10) verbunden wird.

5. Verfahren gemäß Anspruch 4, **dadurch gekennzeichnet, daß** mittels Abschalten der Speisung der Primärspule (9) der Stromanstieg in der Sekundärspule (10) über eine Kapazität (17) verzögert wird.

6. Verfahren gemäß Anspruch 3, **dadurch gekenn-**

**zeichnet, daß** im Temperaturmeßmodus (29) das Temperatursignal des Verstärkers (21) zur Offset- und Empfindlichkeitskorrektur des Kraftsignals verwendet wird.

7. Verfahren gemäß Anspruch 3, **dadurch gekennzeichnet, daß** die Übergangswiderstände von dem Kraftsensor (7) zugeordneten, die Modusumschaltung ausführenden Schalterelementen (5, 6; 19, 20) klein gegenüber dem Widerstand am Eingang (22) des Verstärkers (21) sind.

8. Verfahren gemäß Anspruch 1, **dadurch gekennzeichnet, daß** im Kraftmeßmodus (30) zur Verkürzung der Einschwingzeiten der Verstärker (21) mittels Widerständen $R_1$, $R_2$ auf Mittenspannung gelegt wird.

9. Verfahren gemäß Anspruch 1, **dadurch gekennzeichnet, daß** im Kraftmeßmodus (30) der komplexe Widerstand der Sekundärspule (10) groß gegenüber den Übergangswiderständen des ersten und zweiten Schaltelementes (5, 6) ist.

10. Verfahren gemäß Anspruch 1, **dadurch gekennzeichnet, daß** im Störungsfalle die Steuerung (2) über Ansteuerleitungen (40, 41, 42, 43) die Schaltelemente (5, 6; 19,20; 27) im Temperaturmeßmodus (29) unterdrückt und den Kraftmeßmodus (30) durchschaltet.

11. Verfahren gemäß Anspruch 1, **dadurch gekennzeichnet, daß** in der Sekundärspule (10) des magnetoelastischen Sensors (7) durch die mechanische Beanspruchung des magnetoelastischen Kraftsensors (7) die erzeugte Spannung phasenrichtig gleichgerichtet wird.

12. Verfahren gemäß Anspruch 1, **dadurch gekennzeichnet, daß** der magnetoelastische Sensor (7) in Kraftfahrzeugen mit einer unipolaren Versorgungsspannung an der H-Brückenschaltung betrieben wird, deren Transistoren die Primärspule (9) und die Sekundärspule (10) wechselseitig durchschalten.

13. Verfahren gemäß einem oder mehrerer der vorhergehenden Ansprüche, **dadurch gekennzeichnet, daß** der Steuerblock (2), der Auswertebaustein (4), die Schaltelemente (5, 6; 19, 20; 27) sowie die Datenübertragungs- und Ansteuerleitungen (40, 41, 42 und 43) in CMOS-Technik hergestellt sind.

Fig. 1

## Fig. 2

## Fig. 3

# Fig. 4

Europäisches
Patentamt

**EUROPÄISCHER RECHERCHENBERICHT**

Nummer der Anmeldung

EP 01 12 7065

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| Y | US 4 541 289 A (VALDEMARSSON STEFAN) 17. September 1985 (1985-09-17) * das ganze Dokument * | 1,2 | G01L1/12 G01L1/14 |
| A | | 3-13 | |
| Y | US 5 307 690 A (HANAZAWA AKIYOSHI) 3. Mai 1994 (1994-05-03) * Spalte 2, Zeile 25 - Spalte 3, Zeile 38 * * Spalte 4, Zeile 58 - Spalte 6, Zeile 25 * * Abbildungen 1-3 * | 1,2 | |
| A | | 3-13 | |
| A,D | DE 197 20 641 A (BOSCH GMBH ROBERT) 19. November 1998 (1998-11-19) * das ganze Dokument * | 1 | |

**RECHERCHIERTE SACHGEBIETE (Int.Cl.7)**

G01L

Der vorliegende Recherchenbericht wurde für alle Patentansprüche erstellt

| Recherchenort | Abschlußdatum der Recherche | Prüfer |
|---|---|---|
| MÜNCHEN | 17. April 2002 | Coda, R |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes
Dokument

EPO FORM 1503 03.82 (P04C03)

### ANHANG ZUM EUROPÄISCHEN RECHERCHENBERICHT
### ÜBER DIE EUROPÄISCHE PATENTANMELDUNG NR.

EP 01 12 7065

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-04-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 4541289 | A | 17-09-1985 | SE | 430541 B | 21-11-1983 |
| | | | CA | 1193469 A1 | 17-09-1985 |
| | | | DE | 3365390 D1 | 25-09-1986 |
| | | | EP | 0091880 A1 | 19-10-1983 |
| | | | JP | 58173443 A | 12-10-1983 |
| | | | SE | 8201869 A | 25-09-1983 |
| US 5307690 | A | 03-05-1994 | JP | 2776693 B2 | 16-07-1998 |
| | | | JP | 6026950 A | 04-02-1994 |
| | | | JP | 5034218 A | 09-02-1993 |
| DE 19720641 | A | 19-11-1998 | DE | 19720641 A1 | 19-11-1998 |

EPO FORM P0461

Für nähere Einzelheiten zu diesem Anhang : siehe Amtsblatt des Europäischen Patentamts, Nr. 12/82